# EUROPÄISCHE PATENTSCHRIFT

(11) **EP 2 057 049 B1**
(45) Veröffentlichungstag und Bekanntmachung des Hinweises auf die Patenterteilung: **25.06.2014**
(21) Anmeldenummer: 07801758.9
(22) Anmeldetag: 18.08.2007
(51) Int. Cl.: B60T 8/171

(54) **STRASSENFAHRZEUG, INSBESONDERE PERSONENKRAFTWAGEN ODER LASTKRAFTWAGEN**
ROAD VEHICLE, IN PARTICULAR PASSENGER VEHICLE OR TRUCK
VÉHICULE ROUTIER, NOTAMMENT VOITURE PARTICULIÈRE OU CAMION

(30) Priorität: 30.08.2006 DE 102006040676
(43) Veröffentlichungstag der Anmeldung: 13.05.2009
(73) Patentinhaber: Aktiebolaget SKF, 415 50 Göteborg (SE)
(72) Erfinder: DITTMAR, Rico, 97421 Schweinfurt (DE); GRAF, Jens, 97422 Schweinfurt (DE)
(74) Vertreter: Kohl, Thomas
(86) Internationale Anmeldenummer: PCT/EP2007/007318
(87) Internationale Veröffentlichungsnummer: WO 2008/025463

(56) Entgegenhaltungen:
- EP-A- 0 018 960
- EP-A- 1 076 232
- EP-A- 1 350 642
- GB-A- 2 407 164
- US-A- 3 668 629
- US-B1- 6 202 020
- US-B1- 6 490 540

## Beschreibung

Die Erfindung betrifft ein Straßenfahrzeug, insbesondere einen Personenkraftwagen oder einen Lastkraftwagen, der mindestens einen Achskörper aufweist, der eine Längserstreckung in Richtung horizontal quer zur Fahrtrichtung des Straßenfahrzeugs aufweist, wobei beidseitig von der Mitte des Achskörpers an dessen Ende Naben zur Aufnahme von Rädern angeordnet sind.

Bei Straßenfahrzeugen dieser Art besteht der Wunsch, dass Fahrverhalten unter Einsatz elektronischer Steuerungselemente zu verbessern. Derartige Systeme sind unter der Bezeichnung ESP (Elektronisches Stabilitätsprogramm - Electronic Stability Program) bekannt. Neben der Ausstattung mit Antiblockiersystemen (ABS) und Antriebsschlupfregelungen (ASR) kommt auch der Überwachung und gegebenenfalls der Korrektur von Lenkbewegungen, insbesondere bei Ausweichmanövern, Bedeutung zu.

Aus der DE 600 20 020 T2 ist eine Stabilitätsregelung für Kraftfahrzeuge bekannt, die eine zentral angeordnete Seitenbeschleunigungsmesseinrichtung, eine ebenfalls zentral angeordnete Gierratenmesseinrichtung sowie Drehgeschwindigkeitsmesseinrichtungen an jedem Rad aufweist. Eine ähnliche Lösung offenbart die DE 101 57 976 A1**.**

Die DE 39 30 302 A1 offenbart eine Steuervorrichtung mit Beschleunigungssensoren für Kraftfahrzeuge, bei denen mehrere Beschleunigungssensoren, auch für senkrechte Beschleunigungen, vorgesehen sein können.

Weitere ähnliche Lösungen sind aus der EP 0 018 960 A**,** aus der US 6 202 020 B1**,** aus der US 3 668 629 A**,** aus der EP 1 076 232 A**,** aus der EP 1 350 642 A**,** aus der GB 2 407 164 A und aus der US 6 490 540 B1 bekannt.

Die Qualität der elektronischen Stabilitätskontrolle ist entscheidend von den ermittelten Fahrzeugdaten abhängig, so dass es wichtig ist, die Steuerungseinheit mit bestmöglichen und repräsentativen Messwerten zu versorgen. Es hat sich herausgestellt, dass die Aufnahme der Raddrehzahlen und einer zentral gemessenen Beschleunigung mitunter die diesbezüglichen Anforderungen nicht erfüllt. Es ist nämlich hiermit im Allgemeinen keine Aussage über den Straßenkontakt der Räder bzw. Reifen und der Lage der Achse zum Fahrzeugchassis möglich.

Der Erfindung liegt daher die **Aufgabe** zu Grunde, ein Straßenfahrzeug der eingangs genannten Art so auszustatten, dass es in verbesserter Weise möglich wird, die für eine elektronische Fahrstabilisierung benötigten Daten zu erheben. Damit soll es möglich werden, die Unfallgefahr des Fahrzeugs durch Einsatz eines verbesserten Fahrstabilitätsprogramms zu reduzieren.

Die **Lösung** dieser Aufgabe durch die Erfindung ist gekennzeichnet durch mindestens einen Beschleunigungssensor, der von der Mitte beabstandet so am ungefederten Teil des Achskörpers angeordnet ist, dass er zumindest Beschleunigungen erfassen kann, die in Richtung vertikal quer zur Fahrtrichtung des Straßenfahrzeugs liegen, wobei weiterhin eine Einrichtung zur Ermittlung einer Aussage über den Fahrzeugzustand vorhanden ist, wobei die Einrichtung Rechenmittel umfasst, die mit dem mindestens einen Beschleunigungssensor verbunden sind, wobei der mindestens eine Beschleunigungssensor zur Aufnahme von Körperschall, der zwischen Rad und Fahrbahn entsteht, ausgebildet ist und wobei die Rechenmittel zur Ermittlung ausgebildet sind, dass es zu einem Abheben eines Reifens von der Fahrbahn beim Ausbleiben des Körperschallsignals des mindestens einen Beschleunigungssensor kommt.

Bevorzugt ist dabei vorgesehen, dass spiegelbildlich von der Mitte des Achskörpers aus betrachtet zwei Beschleunigungssensoren am Achskörper angeordnet sind. Hiermit wird es möglich, die Drehbeschleunigung des Achskörpers um die Achse der Fahrtrichtung zu ermitteln; gleichermaßen ist es damit möglich, den Drehwinkel des Achskörpers um die Achse der Fahrtrichtung zu bestimmen.

Der mindestens eine Beschleunigungssensor ist bevorzugt nahe an der Nabe angeordnet. Damit wird es möglich, Aussagen darüber machen zu können, wie die Traktion des Reifens auf der Fahrbahn ist bzw. ob es zu einem Abheben des Reifens von der Fahrbahn kommt. Der Beschleunigungssensor erfasst nämlich den Körperschall (Abrollgeräusche des Reifens auf der Fahrbahn), der zwischen Rad und Fahrbahn entsteht; beim Ausbleiben eines entsprechenden Signals kann auf das Abheben des Reifens von der Fahrbahn geschlossen werden.

Ferner kann mindestens ein Drehzahlsensor zur Messung der Drehzahl der Nabe relativ zum Achskörper vorgesehen sein; vorzugsweise ist an beiden Naben jeweils ein Drehzahlsensor angeordnet. Damit können auch alle Schwankungen der Drehzahl erfasst werden, was Hinweise auf den Fahrzeugzustand liefert.

Bevorzugt sind die Rechenmittel mit dem mindestens einen Beschleunigungssensor und mit dem mindestens einen Drehzahlsensor verbunden. Die Rechenmittel können dabei so ausgebildet sein, dass sie die Ermittlung der Drehbeschleunigung des Achskörpers um die Achse der Fahrtrichtung unter Verwertung der von dem mindestens einen Beschleunigungssensor ermittelten Beschleunigungen vornehmen können. Weiterhin kann vorgesehen werden, dass die Rechenmittel ausgebildet sind zur Ermittlung der Lage des Achskörpers im Raum in Richtung der Achse der Fahrtrichtung betrachtet. Schließlich sind die Rechenmittel bevorzugt ausgebildet zur Erfassung der von den Beschleunigungssensoren gemessenen Beschleunigungen, die - wie erläutert - eine Aussage über den Kontakt des Reifens mit der Fahrbahn erlauben.

In vorteilhafter Weise erlaubt das beschriebene Vorgehen eine genauere Aussage über den Fahrzeugzustand. Insbesondere ist es möglich, die Winkellage um die

Fahrzeuglängsachse (entsprechend der Achse der Fahrtrichtung) zu bestimmen. Ferner ist durch die beschriebenen Beschleunigungssensoren eine Erfassung des Körperschalls möglich, was einen Hinweis darauf gibt, wie der Kontakt des Reifens auf der Straße ist bzw. ob es gegebenenfalls zu einem Abheben des Reifens von der Straße kommt.

Unter Einbeziehung a) der Winkelbeschleunigung des Achskörpers um die Achse der Fahrtrichtung, b) der Winkellage des Achskörpers um die Achse der Fahrtrichtung und c) der Beschleunigungen in vertikale Richtung im Bereich der Naben (d. h. des Körperschalls der Naben als Maß des Reifenkontakts mit der Straße) ist eine verbesserte Fahrstabilisierung möglich. Es können insbesondere kritische Bewegungsänderungen des Fahrzeugs in einfacher Weise ermittelt werden, wodurch Fahrstabilisierungsprogramme verbessert werden können. Die Daten werden in einer zentralen Rechnereinheit verarbeitet, in der entsprechende Algorithmen hinterlegt sind, um durch Ausgabe von Alarmsignalen an den Fahrer (bei kritischem Fahrzeugzustand) bzw. durch Eingriff in die Lenkung und/oder in das Bremssystem und/oder auf den Motor bzw. das Getriebe Einfluss auf die Fahrstabilität zu nehmen. Dabei kann es zu einer gezielten Abbremsung einzelner Räder mit definierter Bremskraft und auch zu einer Beeinflussung der Motorsteuerung kommen.

Insbesondere bei Kurvenfahrten kann so auf ein Ausbrechen des Fahrzeugs und auf eine entsprechende Gierbewegung des Fahrzeugs positiv Einfluss genommen werden.

Besonders vorteilhaft kommt der Erfindungsvorschlag bei Lastkraftwagen und hier an der angetriebenen Hinterachse zum Einsatz. Die Messungen mittels der beschriebenen Sensoren erfolgt bevorzugt am Zugfahrzeug. Es ist aber auch denkbar, dass alternativ oder additiv die Messung an einem Anhänger erfolgt. Bevorzugt können hierbei gezielt die Bremsen am Zugfahrzeug und/oder am Anhänger beeinflusst werden.

Die Übertragung der gemessenen Daten der Sensoren erfolgt über an sich bekannte Datenübertragungsmittel, wobei geeignete BUS-Systeme bevorzugt werden. Diese habe bevorzugt mindestens zwei Kanäle.

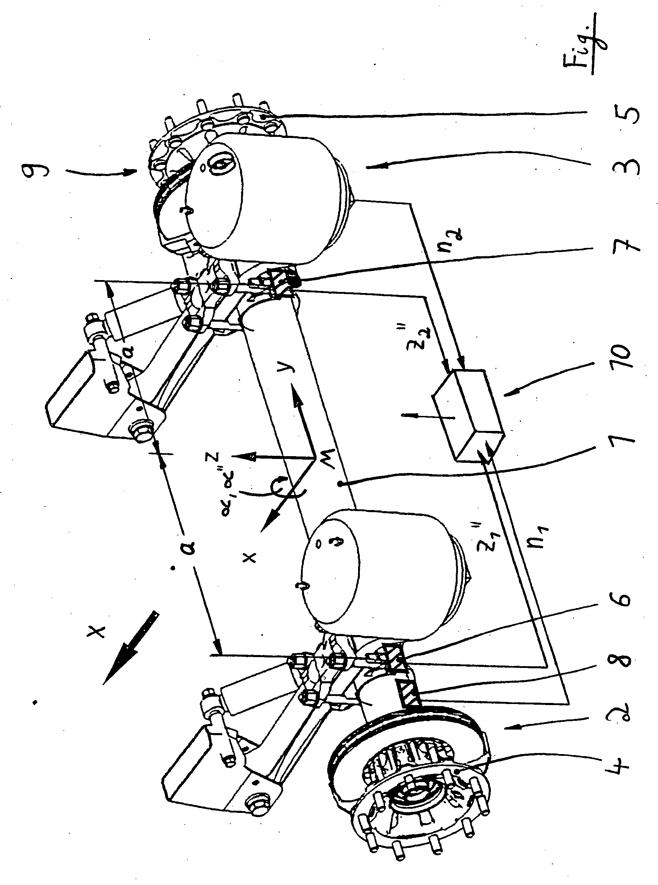

In der Zeichnung ist ein Ausführungsbeispiel der Erfindung dargestellt. Die einzige Figur zeigt in perspektivischer Ansicht einen Achskörper eines Lastkraftwagens mit endseitig angeordneten Naben ohne Reifen.

In der Figur ist der Achskörper 1 einer angetriebenen Hinterachse eines Lastkraftwagens zu sehen. Der Achskörper 1 ist röhrenförmig ausgebildet und hat eine Längserstreckung quer und horizontal zur Fahrtrichtung x des Fahrzeugs. Die Richtung der Erstreckung des Achskörpers 1 ist mit y angegeben. Senkrecht zur Fahrtrichtung x und der Richtung y steht die Vertikalenrichtung z, d. h. die Richtung vertikal und quer zur Fahrzeugrichtung x. An den Enden 2 und 3 des Achskörpers 1 sind Naben 4 bzw. 5 angeordnet, an denen in bekannter Weise nicht dargestellte Räder angeordnet werden können. Der Achskörper 1 hat weiterhin eine Mitte M, die im Wesentlichen im Schnittpunkt des Achskörpers 1 mit der Fahrzeugmittenebene entspricht.

Für die elektronische Fahrstabilisierung soll vorliegend die Drehbeschleunigung α" um die Achse x, also die Achse der Fahrtrichtung, ermittelt werden. Ist die Drehbeschleunigung α" bekannt, kann hieraus durch Integration die Drehgeschwindigkeit α' und durch nochmalige Integration der Drehwinkel α um die Achse x der Fahrtrichtung ermittelt werden.

Zur Ermittlung der Drehbeschleunigung α" ist erfindungsgemäß mindestens einen Beschleunigungssensor 6, 7 vorgesehen, der von der Mitte M beabstandet - nämlich in einem Abstand a - so am Achskörper 1 angeordnet ist, dass er zumindest Beschleunigungen erfassen kann, die in Richtung z vertikal quer zur Fahrtrichtung x liegen. Vorliegend sind zwei Beschleunigungssensoren 6 und 7 jeweils benachbart und in der Nähe der Naben 4, 5 angeordnet. Die von den Sensoren 6, 7 gemessenen Beschleunigungen z" in Richtung z werden an ein Rechenmittel 10 übertragen. Dort ist auch der Abstand a hinterlegt. Aus der gemessenen Beschleunigung z" und dem Abstand a kann durch Division die Winkel- oder Drehbeschleunigung α" ermittelt werden. Die Integration der Beschleunigung α" liefert die Drehgeschwindigkeit α' bzw. die nochmalige Integration den Drehwinkel α. Damit ist die Drehlage des Achskörpers 1 gegenüber der Vertikalen (entsprechend der Achsrichtung z), also der Richtung der Schwerkraft, möglich.

Zwei Drehzahlsensoren 8 und 9 detektieren in bekannter Weise die Drehzahl n der jeweiligen Naben 4 und 5 und leiten diese Werte gleichermaßen an die Rechenmittel 10 weiter.

Die zur Verfügung gestellten Werte werden in der oben beschriebenen Weise eingesetzt bzw. verwertet, um Aussagen über den Fahrzeugzustand machen zu können und gegebenenfalls mittels entsprechender Algorithmen Maßnahmen festlegen zu können, mit denen die Rechenmittel 10 im Sinne eines elektronischen Stabilitätsprogramm Einfluss auf die Fahrparameter (Bremsen, Lenkung, Motor) nehmen zu können.

Die Beschleunigungssensoren 6 und 7 können neben der Beschleunigungsmessung in der genannten Richtung z auch ausgebildet sein, um Beschleunigungen in andere Richtungen (x bzw. y) erfassen zu können.

### Bezugszeichenliste

- 1: Achskörper
- 2: Ende des Achskörpers
- 3: Ende des Achskörpers
- 4: Nabe
- 5: Nabe
- 6: Beschleunigungssensor
- 7: Beschleunigungssensor
- 8: Drehzahlsensor
- 9: Drehzahlsensor
- 10: Rechenmittel

- x: Fahrtrichtung
- y: Richtung horizontal quer zur Fahrtrichtung
- z: Richtung vertikal quer zur Fahrtrichtung
- z': Geschwindigkeit
- z": Beschleunigung
- M: Mitte des Achskörpers
- n: Drehzahl der Nabe
- α: Drehwinkel
- α': Drehgeschwindigkeit
- α": Drehbeschleunigung
- a: Abstand

## Patentansprüche

1. Straßenfahrzeug, insbesondere Personenkraftwagen oder Lastkraftwagen, der mindestens einen Achskörper (1) aufweist, der eine Längserstreckung in Richtung (y) horizontal quer zur Fahrtrichtung (x) des Straßenfahrzeugs aufweist, wobei beidseitig von der Mitte (M) des Achskörpers (1) an dessen Ende (2, 3) Naben (4, 5) zur Aufnahme von Rädern angeordnet sind,
wobei mindestens ein Beschleunigungssensor (6, 7) vorhanden ist, der von der Mitte (M) beabstandet (a) so am ungefederten Teil des Achskörpers (1) angeordnet ist, dass er zumindest Beschleunigungen erfassen kann, die in Richtung (z) vertikal quer zur Fahrtrichtung (x) des Straßenfahrzeugs liegen,
wobei weiterhin eine Einrichtung (10, 6, 7, 8, 9) zur Ermittlung einer Aussage über den Fahrzeugzustand vorhanden ist,
wobei die Einrichtung (10, 6, 7, 8, 9) Rechenmittel (10) umfasst, die mit dem mindestens einen Beschleunigungssensor (6, 7) verbunden sind,
**dadurch gekennzeichnet dass**
wobei der mindestens eine Beschleunigungssensor (6, 7) zur Aufnahme von Körperschall, der zwischen Rad und Fahrbahn entsteht, ausgebildet ist und
wobei die Rechenmittel (10) zur Ermittlung ausgebildet sind, dass es zu einem Abheben eines Reifens von der Fahrbahn beim Ausbleiben des Körperschallsignals des mindestens einen Beschleunigungssensor (6, 7) kommt.

2. Straßenfahrzeug nach Anspruch 1, **dadurch gekennzeichnet, dass** spiegelbildlich von der Mitte (M) des Achskörpers (1) aus betrachtet zwei Beschleunigungssensoren (6, 7) am Achskörper (1) angeordnet sind.

3. Straßenfahrzeug nach Anspruch 1 oder 2, **dadurch gekennzeichnet, dass** der mindestens eine Beschleunigungssensor (6, 7) nahe an der Nabe (4, 5) angeordnet ist.

4. Straßenfahrzeug nach einem der Ansprüche 1 bis 3, **gekennzeichnet durch** mindestens einen Drehzahlsensor (8, 9) zur Messung der Drehzahl (n) der Nabe (4, 5) relativ zum Achskörper (1).

5. Straßenfahrzeug nach Anspruch 4, **dadurch gekennzeichnet, dass** an beiden Naben (4, 5) jeweils ein Drehzahlsensor (8, 9) angeordnet ist.

6. Straßenfahrzeug nach Anspruch 4 oder 5, **dadurch gekennzeichnet, dass** die Rechenmittel (10) mit dem mindestens einen Beschleunigungssensor (6, 7) und mit dem mindestens einen Drehzahlsensor (8, 9) verbunden sind.

7. Straßenfahrzeug nach Anspruch 6, **dadurch gekennzeichnet, dass** die Rechenmittel (10) ausgebildet sind zur Ermittlung der Drehbeschleunigung (α") des Achskörpers (1) um die Achse der Fahrtrichtung (x) unter Verwertung der von dem mindestens einen Beschleunigungssensor (6, 7) ermittelten Beschleunigungen (z").

8. Straßenfahrzeug nach Anspruch 6, **dadurch gekennzeichnet, dass** die Rechenmittel (10) ausgebildet sind zur Ermittlung der Lage (α) des Achskörpers (1) im Raum in Richtung der Achse der Fahrtrichtung (x) betrachtet.

9. Straßenfahrzeug nach einem der Ansprüche 6 bis 8, **dadurch gekennzeichnet, dass** die Rechenmittel (10) ausgebildet sind zur Erfassung der von den Beschleunigungssensoren (6, 7) gemessenen Beschleunigungen (z").

10. Straßenfahrzeug nach einem der Ansprüche 1 bis 9, **dadurch gekennzeichnet, dass** der Achskörper (1) Bestandteil einer angetriebenen Achse des Straßenfahrzeugs ist.

11. Straßenfahrzeug nach Anspruch 10, **dadurch gekennzeichnet, dass** die angetriebene Achse des Straßenfahrzeugs die Hinterachse ist.

12. Straßenfahrzeug nach Anspruch 10 oder 11, **dadurch gekennzeichnet, dass** die Achse Bestandteil der Zugmaschine eines Lastkraftwagens ist.

## Claims

1. Road vehicle, in particular passenger vehicle or truck, which has at least one axle body (1) which has a longitudinal extent in the direction (y) horizontally and transversely with respect to the direction of travel (x) of the road vehicle, wherein hubs (4, 5) for receiving wheels are arranged on both sides of the centre (M) of the axle body (1), at the end (2, 3) thereof,
wherein there is at least one acceleration sensor (6, 7) which is arranged spaced apart (a) from the centre (M) on the nonsprung part of the axle body (1) in such a way that it can sense at least accelerations which lie in the direction (z) vertically and transversely with respect to the direction of travel (x) of the road vehicle,
wherein there is also a device (10, 6, 7, 8, 9) for determining information about the state of the vehicle,
wherein the device (10, 6, 7, 8, 9) comprises computing means (10) which are connected to the at least one acceleration sensor (6, 7), **characterized in that** the at least one acceleration sensor (6, 7) is designed to pick up solid-borne sound which is produced between the wheel and the carriageway, and
wherein the computing means (10) are designed to determine that a tyre lifts off from the carriageway when the solid-borne sound signal of the at least one acceleration sensor (6, 7) fails to occur.

2. Road vehicle according to Claim 1, **characterized in that** two acceleration sensors (6, 7) are arranged on the axle body (1) when viewed in a mirror-symmetrical fashion from the centre (M) of the axle body (1).

3. Road vehicle according to Claim 1 or 2, **characterized in that** the at least one acceleration sensor (6, 7) is arranged near to the hub (4, 5).

4. Road vehicle according to one of Claims 1 to 3, **characterized by** at least one rotational speed sensor (8, 9) for measuring the rotational speed (n) of the hub (4, 5) relative to the axle body (1).

5. Road vehicle according to Claim 4, **characterized in that** a rotational speed sensor (8, 9) is arranged on each of the two hubs (4, 5).

6. Road vehicle according to Claim 4 or 5, **characterized in that** the computing means (10) are connected to the at least one acceleration sensor (6, 7) and to the at least one rotational speed sensor (8, 9) .

7. Road vehicle according to Claim 6, **characterized in that** the computing means (10) are designed to determine the rotational acceleration (α") of the axle body (1) about the axle of the direction of travel (x) by evaluating the accelerations (z") determined by the at least one acceleration sensor (6, 7).

8. Road vehicle according to Claim 6, **characterized in that** the computing means (10) are designed to determine the position (α) of the axle body (1) when viewed in the space in the direction of the axle of the direction of travel (x).

9. Road vehicle according to one of Claims 6 to 8, **characterized in that** the computing means (10) are designed to detect the accelerations (z") measured by the acceleration sensors (6, 7).

10. Road vehicle according to one of Claims 1 to 9, **characterized in that** the axle body (1) is a component of a driven axle of the road vehicle.

11. Road vehicle according to Claim 10, **characterized in that** the driven axle of the road vehicle is the rear axle.

12. Road vehicle according to Claim 10 or 11, **characterized in that** the axle is a component of the traction unit of a truck.

## Revendications

1. Véhicule routier, en particulier voiture particulière ou camion, présentant au moins un corps d'essieu (1) qui présente une étendue longitudinale dans la direction (y) horizontalement et transversalement à la direction de conduite (x) du véhicule routier, des moyeux (4, 5) pour recevoir des roues étant disposés de part et d'autre du centre (M) du corps d'essieu (1) au niveau de son extrémité (2, 3),
au moins un capteur d'accélération (6, 7) étant prévu, lequel est disposé à distance (a) du centre (M) sur la partie non suspendue à ressort du corps d'essieu (1) de telle sorte qu'il puisse détecter au moins des accélérations qui s'exercent dans la direction (z) verticalement et transversalement à la direction de conduite (x) du véhicule routier,
un dispositif (10, 6, 7, 8, 9) étant en outre prévu pour déterminer une information relative à l'état du véhicule,
le dispositif (10, 6, 7, 8, 9) comprenant des moyens de calcul (10) qui sont connectés à l'au moins un capteur d'accélération (6, 7), **caractérisé en ce que**
l'au moins un capteur d'accélération (6, 7) est réalisé pour enregistrer le bruit de structure qui se produit entre la roue et la chaussée, et
les moyens de calcul (10) sont réalisés pour déterminer qu'il se produit un soulèvement d'un pneu de la chaussée en l'absence d'un signal de bruit structurel provenant de l'au moins un capteur d'accélération (6, 7).

2. Véhicule routier selon la revendication 1, **caractérisé en ce que** deux capteurs d'accélération (6, 7) sont disposés sur le corps d'essieu (1) suivant une symétrie spéculaire par rapport au centre (M) du corps d'essieu (1).

3. Véhicule routier selon la revendication 1 ou 2, **caractérisé en ce que** l'au moins un capteur d'accélération (6, 7) est disposé à proximité du moyeu (4, 5).

4. Véhicule routier selon l'une quelconque des revendications 1 à 3, **caractérisé par** au moins un capteur de vitesse de rotation (8, 9) pour mesurer la vitesse de rotation (n) du moyeu (4, 5) par rapport au corps d'essieu (1).

5. Véhicule routier selon la revendication 4, **caractérisé en ce qu'**un capteur de vitesse de rotation respectif (8, 9) est disposé sur les deux moyeux (4, 5).

6. Véhicule routier selon la revendication 4 ou 5, **caractérisé en ce que** les moyens de calcul (10) sont connectés à l'au moins un capteur d'accélération (6, 7) et à l'au moins un capteur de vitesse de rotation (8, 9).

7. Véhicule routier selon la revendication 6, **caractérisé en ce que** les moyens de calcul (10) sont réalisés pour déterminer l'accélération de rotation (α'') du corps d'essieu (1) autour de l'axe de la direction de conduite (x) en utilisant les accélérations (z'') déterminées par l'au moins un capteur d'accélération (6, 7).

8. Véhicule routier selon la revendication 6, **caractérisé en ce que** les moyens de calcul (10) sont réalisés pour déterminer la position (α) du corps d'essieu (1) dans l'espace dans la direction de l'axe de la direction de conduite (x).

9. Véhicule routier selon l'une quelconque des revendications 6 à 8, **caractérisé en ce que** les moyens de calcul (10) sont réalisés pour détecter les accélérations (z") mesurées par les capteurs d'accélération (6, 7).

10. Véhicule routier selon l'une quelconque des revendications 1 à 9, **caractérisé en ce que** le corps d'essieu (1) fait partie d'un essieu moteur du véhicule routier.

11. Véhicule routier selon la revendication 10, **caractérisé en ce que** l'essieu moteur du véhicule routier est l'essieu arrière.

12. Véhicule routier selon la revendication 10 ou 11, **caractérisé en ce que** l'essieu fait partie du véhicule tracteur d'un camion.
